# EUROPÄISCHE PATENTSCHRIFT

(11) **EP 4 038 439 B1**
(45) Veröffentlichungstag und Bekanntmachung des Hinweises auf die Patenterteilung: **12.08.2026**
(21) Anmeldenummer: 20812287.9
(22) Anmeldetag: 24.11.2020
(51) Int. Cl.: G02B 27/01, G02B 30/33, H04N 13/302, H04N 13/315, H04N 13/363, H04N 13/366

(54) **AUGMENTED-REALITY-HEAD-UP-DISPLAY**
AUGMENTED-REALITY HEAD-UP DISPLAY
AFFICHAGE TÊTE HAUTE À RÉALITÉ AUGMENTÉE

(30) Priorität: 29.11.2019 DE 102019218627
(43) Veröffentlichungstag der Anmeldung: 10.08.2022
(73) Patentinhaber: VOLKSWAGEN AKTIENGESELLSCHAFT, 38440 Wolfsburg (DE)
(72) Erfinder: LEISTER, Norbert, 01259 Dresden (DE)
(86) Internationale Anmeldenummer: PCT/EP2020/083225
(87) Internationale Veröffentlichungsnummer: WO 2021/105130

(56) Entgegenhaltungen:
- EP-A1- 2 200 332
- DE-A1- 102013 212 667
- DE-A1- 102013 212 667
- DE-A1- 102017 223 273
- DE-A1- 102017 223 273
- US-A1- 2005 052 617
- US-A1- 2005 052 617
- US-A1- 2013 077 154
- US-A1- 2013 077 154

## Beschreibung

Die vorliegende Erfindung betrifft ein Augmented-Reality-Head-up-Display, insbesondere ein Augmented-Reality-Head-up-Display für ein Kraftfahrzeug.

Mit der stetigen Weiterentwicklung von Virtual & Augmented Reality-Technologien und - Anwendungen finden diese auch Einzug in das Automobil. Bei Augmented Reality (AR), auf Deutsch "erweiterte Realität", handelt es sich um die Anreicherung der realen Welt durch virtuelle Elemente, die im dreidimensionalen Raum ortskorrekt registriert sind und eine Echtzeitinteraktion erlauben. Da sich in der Fachwelt im deutschsprachigen Raum der Ausdruck "Augmented Reality" gegenüber dem Ausdruck "erweiterte Realität" durchgesetzt hat, wird im Folgenden ersterer benutzt.

Eine mögliche technische Realisierung, um den Fahrerarbeitsplatz entsprechend mit perspektivisch korrekten virtuellen Erweiterungen anzureichern, bietet das Head-up-Display (HUD). Dabei werden die Lichtstrahlen eines im Armaturenbrett verbauten Displays über mehrere Spiegel und Linsen gefaltet und über eine Projektionsfläche in das Auge des Fahrers gespiegelt, sodass dieser ein virtuelles Bild außerhalb des Fahrzeugs wahrnimmt. Als Projektionsfläche dient im Automobilbereich oftmals die Frontscheibe, deren gekrümmte Form bei der Darstellung berücksichtigt werden muss. Als Alternative wird zum Teil auch eine zusätzliche Scheibe aus Glas oder Kunststoff genutzt, die zwischen dem Fahrer und der Frontscheibe auf dem Armaturenbrett angeordnet ist. Durch die optische Überlagerung von Anzeige und Fahrszene sind weniger Kopf- und Augenbewegungen zum Ablesen der Informationen notwendig. Zudem verringert sich der Adaptationsaufwand für die Augen, da abhängig von der virtuellen Distanz der Anzeige weniger bis gar nicht akkommodiert werden muss. Aktuelle Serien-HUDs beschränken sich jedoch auf Anzeigen direkt unter dem primären Sichtbereich des Fahrers und enthalten redundante Informationen, wie z.B. die Geschwindigkeitsanzeige, die auch an anderer Stelle im Cockpit wiederzufinden sind. Diese Anzeigetechnologie reduziert zwar Blickabwendungen von der Straße, hat aber weiterhin den Nachteil, dass die präsentierten Informationen interpretiert und auf die reale Situation übertragen werden müssen, da sie nicht in der realen Szene registriert sind. Dies kann in komplexen Situationen einen mental beanspruchenden kognitiven Prozess darstellen. Durch Markieren von Objekten und Einblenden von Informationen an ihrem realen Bezugsort, d.h. durch eine kontaktanaloge Darstellung, lassen sich umweltbezogene Informationen im Sichtfeld des Fahrers direkt darstellen. Diese direkte grafische Anreicherung der Umwelt in Form von Augmented Reality kann die kognitiven Transferanforderungen erheblich reduzieren.

Der Betrachter kann das virtuelle Bild nur aus der Position der sogenannten Eyebox betrachten. Als Eyebox oder Betrachterfenster wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Derzeit verfügbare Head-up-Displays nutzen eine einzelne große Eyebox, innerhalb derer sich der Kopf des Betrachters bewegen kann und der Betrachter mit beiden Augen das gleiche flache Bild sieht.

Bekannt sind für andere Anwendungen stereoskopische Displays oder holografische 3D-Displays, bei denen für das linke Auge und das rechte Auge unterschiedliche Inhalte angezeigt werden. Es wird dazu jeweils ein Betrachterfenster für das linke Auge und ein Betrachterfenster für das rechte Auge erzeugt. Diese Displays können beispielsweise als Direktsichtdisplays ausgelegt sein, bei denen Licht von einem TFT-Display (TFT: Thin-Film Transistor; Dünnschichttransistor) mit einer Feldlinse und einer Beugungseinrichtung zum linken oder zum rechten Auge gelenkt wird.

In diesem Zusammenhang beschreibt DE 10 2004 044 111 A1 ein Verfahren zum Kodieren und Rekonstruieren von computergenerierten Videohologrammen mittels eines konventionellen Displays. Das Verfahren nutzt optisch fokussierende Mittel, um vertikal kohärentes Licht einer linienförmigen Lichtquelle nach einer Modulation durch die matrixförmige Pixelanordnung in Betrachterfenstern abzubilden. Durch Beugung an den Pixeln wird die holografische Rekonstruktion der Szene für beide Augen eines Betrachters von den Betrachterfenstern aus sichtbar gemacht. Erfindungsgemäß liegen die steuerbaren Pixel innerhalb von Pixelspalten, welche für beide Betrachteraugen jeweils ein separates, eindimensionales, in vertikaler Richtung beugendes Hologramm derselben Szene kodieren, wobei die eindimensionalen Hologramme horizontal verschachtelt sind. Bildtrennmittel mit parallel zu den Pixelspalten angeordneten Trennelementen geben die jeweilige Spaltengruppe für das entsprechende Betrachterauge frei und verdecken diese für das andere Auge.

Im Allgemeinen rekonstruiert ein Hologramm eine 3d-Szene durch kohärente Überlagerung von Lichtwellen in horizontaler und in vertikaler Richtung. Solch ein Video-Hologramm wird Voll-Parallax Hologramm genannt. Die rekonstruierte 3d-Szene kann betrachtet werden mit einer Bewegungsparallaxe in der horizontalen und vertikalen Richtung wie ein reales Objekt. Hierzu wird aber in der Regel eine hohe Auflösung eines Lichtmodulators in horizontaler und in vertikaler Richtung benötigt. Die Anforderungen an den Lichtmodulator werden verringert durch eine Einzel-Parallax Kodierung. Bei einer horizontalen Einzel-Parallax Kodierung erfolgt die holografische Rekonstruktion nur in horizontaler Richtung, während es in vertikaler Richtung keine holografische Rekonstruktion gibt. Dies resultiert in einer rekonstruierten 3d-Szene mit horizontaler Bewegungsparallaxe. Umgekehrt erfolgt bei einer vertikalen Einzel-Parallaxe-Kodierung die holografische Rekonstruktion nur in vertikaler Richtung.

In diesem Zusammenhang beschreibt DE 10 2007 023 785 B4 ein Verfahren zum Berechnen von Videohologrammen, wobei die Berechnung sowohl die Berechnung von Voll-Parallax Hologrammen als auch die Berechnung von Einzel-Parallax Hologrammen beschrieben wird. Es erfolgt ein Zerlegen einer 3d-Szene in Punkte, Berechnen eines Subhologramms für jeden Punkt der 3d Szene, Aufsummieren der Subhologramme zu einem Hologramm. Im Falle der Voll-Parallax Kodierung entsprechen die Sub-Hologramme sphärischen Linsen, im Fall einer Einzel-Parallax Kodierung entsprechen sie Zylinderlinsen. Das Sub-Hologramm umfasst dann in der Regel nur eine Pixelspalte bei einer vertikalen oder eine Pixelzeile bei einer horizontalen Einzel-Parallax Kodierung.

Bekannt sind auch stereoskopische oder holografische Augmented-Reality-Displays in Form von Brillen, sogenannte Head Mounted Displays (HMD), bei denen für jedes Auge separat Objekte der realen Welt und dargestellte Inhalte kombiniert werden. Beispielsweise wird über ein linkes Brillenglas, das als Lichtleiter ausgebildet ist, ein Betrachterfenster für das linke Auge erzeugt und mit Objekten der realen Welt kombiniert, die durch das linke Brillenglas sichtbar sind, und unabhängig davon wird durch ein rechtes Brillenglas ein Betrachterfenster für das rechte Auge erzeugt und mit Objekten der realen Welt kombiniert. Ein stereoskopisches oder Holografisches Augmented-Reality-HMD kann daher aus zwei unabhängigen Einheiten bestehen, d.h. einer Einheit für das linke Auge und einer Einheit für das rechte Auge, die am Kopf des Betrachters gespiegelt zueinander angebracht sind.

Bei einem Augmented-Reality-Head-up-Display ist in der Regel das optische System weit entfernt vom Kopf des Betrachters angebracht, so dass eine Trennung in separate Systeme für das linke Auge und das rechte Auge nicht ohne weiteres möglich ist.

In diesem Zusammenhang beschreibt DE 10 2013 212 667 A1 ein Verfahren zum Darstellen eines dreidimensionalen Bildes unter Verwendung eines Bildgebers einer Blickfeldanzeigeeinrichtung für ein Fahrzeug. Bei dem Verfahren wird eine Warping-Einheit verwendet, die für das linke und rechte Auge eines Betrachters separate Bildvorverzerrungen durchführt.

US 2005/0052617 A1 beschreibt ein Anzeigegerät für ein virtuelles Bild, mit zwei optischen Projektionssystemen, von denen jedes eine Anzeigevorrichtung, eine Lichtquelle und eine Projektionslinse aufweist. Die von der Anzeigevorrichtung erzeugten Bilder werden zu einem optischen Bildlokalisiersystem hin projiziert, welches eine Sammellinse und einen optischen Diffusor aufweist. Die Lichtstrahlen von den optischen Projektionssystemen werden an einer lichtdurchlässigen und reflektierenden Einrichtung reflektiert, so dass die Lichtstrahlen jeweils an dem rechten und dem linken Auge eines Betrachters gesammelt oder gebündelt werden.

DE 10 2017 223 273 A1 beschreibt eine Projektionsvorrichtung für ein Fahrzeug, wobei die Projektionsvorrichtung eine Bilderzeugungsvorrichtung aufweist zur Erzeugung von zwei Bilddarstellungen zur Darstellung einer dreidimensionalen Bilddarstellung. Ferner weist die Projektionsvorrichtung ein Hologramm zum Ablenken der Lichtstrahlen der zwei Bilddarstellungen auf, wobei das Hologramm der Projektionsvorrichtung zwei optische Funktionen aufweist zum voneinander unabhängigen Ablenken der zwei Bilddarstellungen.

Es ist eine Aufgabe der Erfindung, ein alternatives Augmented-Reality-Head-up-Display bereitzustellen, das dazu geeignet ist, stereoskopische oder holografische Inhalte darzustellen.

Diese Aufgabe wird durch ein Augmented-Reality-Head-up-Display mit den Merkmalen des Anspruchs 1 gelöst. Bevorzugte Ausgestaltungen der Erfindung sind Gegenstand der abhängigen Ansprüche.

Gemäß einem Aspekt der Erfindung weist ein Augmented-Reality-Head-up-Display auf:
- zumindest eine Lichtquelle;
- zumindest einen räumlichen Lichtmodulator; und
- ein optisches System, wobei das optische System eingerichtet ist, ein erstes Betrachterfenster für ein rechtes Auge eines Betrachters und ein zweites Betrachterfenster für ein linkes Auge des Betrachters zu erzeugen, wobei das erste Betrachterfenster und das zweite Betrachterfenster in einem horizontalen Abstand, der einem üblichen Augenabstand entspricht, voneinander beabstandet angeordnet sind, und wobei das erste Betrachterfenster und das zweite Betrachterfenster zeitlich nacheinander erzeugt werden. Das optische System weist eine Umschalteinheit mit einem passiven Ablenkelement und zumindest einem Schaltelement zum Umschalten zwischen dem ersten Betrachterfenster und dem zweiten Betrachterfenster auf. Die Umschalteinheit weist ein Gitter auf, wobei das Gitter vergrößert abgebildet wird und der Ablenkwinkel des Gitters, die optische Vergrößerung und eine Bildweite des Gitters in Bezug auf die Betrachterfenster so eingestellt werden, dass ein horizontaler Abstand zwischen dem ersten Betrachterfenster und dem zweiten Betrachterfenster einem Augenabstand eines Betrachters entspricht. Die optische Vergrößerung oder die Bildweite des Gitters sind dabei an den Augenabstand des Betrachters anpassbar.

Bei der erfindungsgemäßen Lösung sorgt das optische System dafür, dass getrennte Betrachterfenster für das rechte und das linke Auge des Betrachters erzeugt werden. Auf diese Weise ist es nicht erforderlich, zwei unabhängige Einheiten für das linke Auge und für das rechte Auge bereitzustellen. Das optische System umfasst einen Kombinierer, der vorzugsweise zwischen 50 cm und 100 cm vom Kopf des Betrachters entfernt ist und der sowohl das von dem Lichtmodulator kommende Licht in Richtung des Betrachters lenkt als auch Licht von der Umgebung in Richtung des Betrachters durchlässt. Licht, welches vom Lichtmodulator in Richtung Betrachterfenster für das linke Auge läuft, und Licht, welches vom Lichtmodulator in Richtung Betrachterfenster für das rechte Auge läuft, kann auf dem Kombinierer wenigstens teilweise überlappen bzw. die gleichen Bereiche des Kombinierers nutzen. Beispielsweise kann es sich beim Kombinierer um die Windschutzscheibe eines Fahrzeugs handeln.

Das erste Betrachterfenster und das zweite Betrachterfenster werden zeitlich nacheinander erzeugt. Das optische System weist dazu eine Umschalteinheit zum Umschalten zwischen dem ersten Betrachterfenster und dem zweiten Betrachterfenster auf. Dieser Ansatz hat den Vorteil, dass das optische System einfach gehalten werden kann, da es nicht gleichzeitig Licht in Richtung beider Betrachterfenster leiten muss. Zudem kann für jedes Betrachterfenster die volle Auflösung des Lichtmodulators genutzt werden, da dieser immer nur ein Bild für eines der Betrachterfenster generieren muss.

Die Umschalteinheit weist ein passives Ablenkelement und zumindest ein Schaltelement auf. Durch das Schaltelement kann eine optische Eigenschaft des einfallenden Lichts kontrolliert beeinflusst werden. Das Ablenkelement ist dabei so ausgestaltet, dass die Ablenkung des einfallenden Lichts von eben dieser optischen Eigenschaft abhängt. Auf diese Weise kann zuverlässig eine Ablenkung des einfallenden Lichts in Richtung des gewünschten Betrachterfensters erreicht werden. Alternativ kann die Umschalteinheit auch einen oder mehrere schaltbare Spiegel aufweisen.

Erfindungsgemäß weist die Umschalteinheit ein Gitter auf. Dabei wird das Gitter vergrößert abgebildet und der Ablenkwinkel des Gitters, die optische Vergrößerung und eine Bildweite des Gitters in Bezug auf die Betrachterfenster werden so eingestellt, dass ein horizontaler Abstand zwischen dem ersten Betrachterfenster und dem zweiten Betrachterfenster einem Augenabstand eines Betrachters entspricht. Das Gitter kann beispielsweise ein Polarisationsgitter sein, wahlweise aber auch ein anderer Typ Gitter. Bei diesem Ansatz stehen mehrere Parameter zur Verfügung, über die eine Anpassung des Abstands der Betrachterfenster an den Augenabstand des Betrachters erzielt werden kann. Beispielsweise kann ein Polarisationsgitter unter Verwendung von ±1. Ordnung und einem Ablenkwinkel von ±4.7 Grad verbaut sein. Eine Abbildung des Gitters mit einer optischen Vergrößerung von 5, in einem Abstand von 2,13 m zum Betrachter, ergibt einen Abstand von 70 mm zwischen den Betrachterfenstern. Dies entspricht einem großen Augenabstand.

Erfindungsgemäß sind die optische Vergrößerung oder die Bildweite des Gitters an den Augenabstand des Betrachters anpassbar. Zu diesem Zweck ist vorzugsweise ein Detektor vorgesehen, z.B. eine Kamera, mit dem der Augenabstand des Betrachters ermittelt werden kann. Durch die Anpassung der optischen Vergrößerung oder der Bildweite kann das System leicht an unterschiedlicher Betrachter angepasst werden.

Gemäß einem Aspekt der Erfindung weist das Augmented-Reality-Head-up-Display zwei oder mehr Lichtquellen mit unterschiedlichen Wellenlängen auf. Inhalte für die jeweiligen Wellenlängen werden auf dem räumlichen Lichtmodulator nacheinander angezeigt und die zwei oder mehr Lichtquellen werden synchronisiert mit den angezeigten Inhalten ein- oder ausgeschaltet. Bei den zwei oder mehr Lichtquellen kann es sich insbesondere um Laser einer bestimmten ersten Wellenlänge und einer dazu unterschiedlichen zweiten Wellenlänge handeln. Die Verwendung unterschiedlicher Wellenlängen sowie einer synchronisierten Ansteuerung der Lichtquellen und des Lichtmodulators ermöglicht die Rekonstruktion von farbigen 3D-Szenen. Vorzugsweise werden wenigstens drei Lichtquellen genutzt, wobei eine Lichtquelle rotes Licht abstrahlt, eine Lichtquelle grünes Licht abstrahlt und eine Lichtquelle blaues Licht abstrahlt. Auf diese Weise ist eine vollfarbige Darstellung möglich.

Gemäß einem Aspekt der Erfindung ist das Gitter relativ zu zumindest einem abbildenden Element des optischen Systems verschiebbar. Bei dem abbildenden Element kann es sich beispielsweise um eine Linse oder einen Spiegel handeln. Durch eine solche Verschiebung des Gitters kann der Abstand zwischen den beiden Betrachterfenstern besonders leicht an den detektierten Augenabstand des Betrachters angepasst werden.

Gemäß einem Aspekt der Erfindung ist das zumindest eine Schaltelement ein Polarisationsumschalter. Das passive Ablenkelement ist in diesem Fall ein Polarisationsstrahlteiler oder ein Polarisationsgitter mit einer von einer Eingangspolarisation des einfallenden Lichts abhängigen bevorzugten Beugungsordnung. Insbesondere kann es sich bei den bevorzugten Beugungsordnungen um die plus erste und die minus erste Ordnung handeln, sodass eine hohe Beugungseffizienz erreicht wird. Mit der minus ersten Ordnung des Polarisationsgitters kann z.B. das Betrachterfenster für das linke Auge und mittels der plus ersten Ordnung das Betrachterfenster für das rechte Auge erzeugt werden, oder umgekehrt. Der Polarisationsumschalter kann beispielsweise ein flüssigkristallbasierter Schalter sein, der so ausgestaltet ist, dass er, wenn keine Spannung anliegt, die Polarisation des einfallenden Lichts dreht, wenn jedoch eine genügend hohe Spannung anliegt, Licht ohne Drehung der Polarisation passieren lässt. Für die farbige Widergabe von Stereo-Bildern oder die farbige Rekonstruktion von 3D-Szenen können gegebenenfalls für mindestens zwei unterschiedliche Wellenlängen separate Polarisationsumschalter eingesetzt werden.

Die sequentielle Darstellung von Inhalten für das erste Betrachterfenster und das zweite Betrachterfenster ist auch bei der farbigen Widergabe von Stereo-Bildern oder der farbigen Rekonstruktion von 3D-Szenen möglich. In diesem Fall erfolgt sowohl eine sequentielle Darstellung von Inhalten der Einzelfarben als auch eine sequentielle Erzeugung der Betrachterfenster für das linke Auge und für das rechte Auge. Der räumliche Lichtmodulator, die Lichtquellen und die Polarisationsumschalter können dabei wie folgt angesteuert bzw. synchronisiert werden. Es werden auf dem Lichtmodulator jeweils nacheinander Inhalte für eine bestimmte Farbe und für ein bestimmtes Auge dargestellt. Die Lichtquelle für diese Farbe ist dazu zeitweise eingeschaltet. Die Lichtquellen für die anderen Farben sind ausgeschaltet. Die Polarisationsumschalter für die anderen Farben sind in einen Zustand geschaltet, in dem sie die Polarisation nicht drehen. Der Polarisationsumschalter für die verwendete Farbe wird so angesteuert, dass er für das eine Auge die Polarisation nicht dreht, aber für das andere Auge die Polarisation dreht.

Gemäß einem Aspekt der Erfindung ist das Polarisationsgitter ein farbkorrigiertes Polarisationsgitter. Dieser Ansatz ist insbesondre von Vorteil bei der farbigen Widergabe eines Stereo-Bildes oder der farbigen holografischen Rekonstruktion einer 3D-Szene. Das farbkorrigierte Polarisationsgitter ist dabei so ausgestaltet, dass es für mindestens zwei unterschiedliche Wellenlängen Licht unter dem gleichen Winkel ablenkt.

Gemäß einem Aspekt der Erfindung weist das optische System wenigstens ein Nachführelement zum Nachführen der Betrachterfenster in Abhängigkeit von einer Augenposition oder einer Kopfposition des Betrachters auf. Zu diesem Zweck ist vorzugsweise ein Detektor vorgesehen, z.B. eine Kamera, mit dem die Augenposition des Betrachters ermittelt werden kann. Durch die Nachführung der Betrachterfenster steht ein größerer Bereich zur Verfügung, in dem der Betrachter stereoskopische oder holografische Inhalte korrekt wahrnehmen kann. Bei dem wenigstens einen Nachführelement kann es sich z.B. um wenigstens ein Gitter mit variabler Periode oder einen drehbaren Spiegel handeln.

Bei einer Ausführungsform der Erfindung wird mit einer Umschaltvorrichtung zwischen den Betrachterfenstern hin und her geschaltet und mit dem Nachführelement die Kopfbewegung nachgeführt. Alternativ kann auch das Umschalten zwischen den Betrachterfenstern mit dem Nachführelement erfolgen, indem abwechselnd das Betrachterfenster an die Position des linken Auges oder des rechten Auges nachgeführt wird. Bei einer weiteren Ausführungsform wird durch das optische System sowohl der Lichtmodulator als auch das Nachführelement oder die passive Ablenkvorrichtung der Umschalteinrichtung abgebildet, wobei sich jedoch der Vergrößerungsfaktor des Bildes des Lichtmodulators von dem Vergrößerungsfaktor des Bildes vom Nachführelement oder von der passiven Ablenkvorrichtung unterscheidet.

Gemäß einem Aspekt der Erfindung werden das erste Betrachterfenster und das zweite Betrachterfenster jeweils in einer Ebene eines Lichtquellenbildes erzeugt. Dabei wird ein vergrößertes Bild des räumlichen Lichtmodulators in einer bestimmten Entfernung von den Betrachterfenstern erzeugt, das als Referenzebene für eine Berechnung eines Hologramms aus einer 3D-Szene dient. Bei dieser Ausführungsform ist das Augmented-Reality-Head-up-Display als holografisches Augmented-Reality-Head-up-Display realisiert. Bevorzugt wird das vergrößerte Bild des räumlichen Lichtmodulators in einer Entfernung zwischen 50 cm und 300 cm von den Betrachterfenstern erzeugt.

Die Ausführungsform als holografisches Display erlaubt es, eine 3D -Szene in ihrer realen Tiefe wiederzugeben. Der räumliche Lichtmodulator wird in eine Ebene abgebildet. Mit Hilfe des in den räumlichen Lichtmodulator eingeschriebenen Hologramms werden Objekte einer 3D Szene vor oder hinter der Ebene des Lichtmodulatorbildes erzeugt. Dadurch wird ein Konflikt zwischen Akkommodation und Vergenz, also Fokustiefe und Eindrehwinkel der Augen eines Betrachters vermieden, sodass eine entspannte Wahrnehmung möglich ist.

Bei einer Berechnung des Hologramms mit Sub-Hologrammen für die einzelnen Punkte der 3D-Szene wird in dieser Ausführungsform der Rechenaufwand für die Berechnung des Hologramms gering gehalten, insbesondere dann, wenn sich das Bild des Lichtmodulators innerhalb der dargestellten 3D-Szene befindet, wenn sich also ein Teil der Objekte der 3D-Szene vor und ein anderer Teil hinter dem Bild des Lichtmodulators befinden. Beispielsweise kann ein Bild des Lichtmodulators in einer Entfernung von 200 cm vom Betrachterfenster erzeugt werden und es können sowohl sehr nahe Objekte innerhalb des Fahrzeugs, also in einem Abstand von weniger als 100 cm, als auch weit entfernte Objekte auf der Straße in einem Abstand von mehreren Metern dargestellt werden.

Gemäß einem Aspekt der Erfindung werden das erste Betrachterfenster und das zweite Betrachterfenster jeweils in einer Ebene eines Bildes des räumlichen Lichtmodulators erzeugt. Dabei wird eine Fourier-Ebene des räumlichen Lichtmodulators in einer bestimmten Entfernung von den Betrachterfenstern erzeugt, die als Referenzebene für eine Berechnung eines Hologramms aus einer 3D-Szene dient. Auch bei dieser Ausführungsform ist das Augmented-Reality-Head-up-Display als holografisches Augmented-Reality-Head-up-Display realisiert. Bevorzugt wird die Referenzebene als Fourier-Ebene des räumlichen Lichtmodulators in einer Entfernung zwischen 50 cm und 300 cm von den Betrachterfenstern erzeugt.

Diese Ausführungsform als holografisches Display erlaubt es wiederum, die 3D-Szene in ihrer realen Tiefe wiederzugeben. Mit Hilfe des in den räumlichen Lichtmodulator eingeschriebenen Hologramms können auch Punkte einer 3d-Szene vor und hinter der Fourier-Ebene des Lichtmodulators erzeugt werden.

Im Vergleich zu der vorangegangenen Ausführungsform hat die hier beschriebene Ausführungsform einen höheren Rechenaufwand bei der Berechnung des Hologramms. Dem steht aber der Vorteil gegenüber, dass die hier beschriebene Ausführungsform besonders lichteffizient ist. Bei einem Head-up-Display wird üblicherweise nur ein geringer Prozentsatz des Sichtfeldes mit angezeigten Informationen gefüllt, da auch die reale Umgebung für den Fahrer noch sichtbar sein muss. Bei Verwendung einer Fourier-Ebene des Lichtmodulators kann Licht von der gesamten Fläche des Lichtmodulators auf diesen Bereich der dargestellten Inhalte gelenkt werden und daher die auf den Lichtmodulator einfallende Intensität besser genutzt werden. Dies gilt auch für eine 3D-Szene, wenn Punkte der 3D-Szene vor oder hinter der Fourier-Ebene erzeugt werden.

Gemäß einem Aspekt der Erfindung entsteht in oder nahe einer Ebene eines Nachführelements oder eines Ablenkelements durch eine erste Abbildungsstufe des optischen Systems ein Zwischenbild des räumlichen Lichtmodulators, das durch eine zweite Abbildungsstufe des optischen Systems weiter abgebildet wird, sodass ein Lichtquellenbild in einer Betrachterebene erzeugt wird.

Das Sichtfeld eines HUD wird durch die Größe des Bildes eines räumlichen Lichtmodulators und die Entfernung dieses Bildes zum Fahrer bestimmt. Um also für einen gegebenen Lichtmodulator mit einem bestimmten Pixelpitch und Pixelanzahl ein gewünschtes Sichtfeld einzustellen, wird eine bestimmte Vergrößerung benötigt. Für ein Ablenkelement oder ein Nachführelement gibt es ebenfalls einen festen Zusammenhang zwischen dem Ablenkwinkel oder Nachführwinkel, den das Element selbst aufweist, der Vergrößerung, mit der dieses Ablenkelement oder Nachführelement im optischen System abgebildet wird, und der Position des Betrachterfensters. Das kann zum Beispiel zu der Anforderung führen, dass eine unterschiedliche Vergrößerung für das Bild des Lichtmodulators und für das Ablenkelement oder das Nachführelement benötigt wird. Üblicherweise wird der Lichtmodulator stark vergrößert abgebildet, zum Beispiel mit einer Vergrößerung von 10 oder mehr.

Die Verwendung von zwei Abbildungsstufen dient vorteilhaft dazu, dass diese Vergrößerungen unabhängig voneinander eingestellt werden können. Außerdem dient sie vorteilhaft dazu, reflektive Komponenten verwenden zu können, wie beispielsweise einen reflektiven Lichtmodulator, z.B. einen LCOS (Liquid Crystal on Silicon; Flüssigkristalle auf Silizium[substrat]) oder auch ein reflektives Nachführelement, und trotzdem nach der zweiten Abbildungsstufe eine Abbildung des Lichtmodulators und des Nachführelements in die gleiche Bildebene zu erreichen. Einen reflektiven Lichtmodulator und ein reflektives Nachführelement könnte man zum Beispiel nicht an der gleichen Position unterbringen, um sie dann gemeinsam abzubilden. Ein reflektiver Lichtmodulator wiederum hat gegenüber einem transmissiven Lichtmodulator den Vorteil der Kompaktheit, da kleine Pixel mit einem großem Füllfaktor realisiert werden können.

Beispielsweise kann der Lichtmodulator durch die erste Abbildungsstufe des optischen Systems zunächst mit einer Vergrößerung von 2 in die Ebene des Ablenkelements abgebildet werden und in einer zweiten Abbildungsstufe das Bild mit einem Faktor 5 vergrößert in die eine Entfernung von ca. 2 m zu einem Betrachterfenster abgebildet werden, so dass die Gesamtvergrößerung des Lichtmodulators 10, die des Ablenkelements aber 5 beträgt.

Gemäß einem Aspekt der Erfindung wird in oder nahe einer Ebene eines Nachführelements oder eines Ablenkelements durch eine erste Abbildungsstufe des optischen Systems eine Fourier-Ebene des räumlichen Lichtmodulators erzeugt, die durch eine zweite Abbildungsstufe des optischen Systems weiter abgebildet wird, sodass ein Bild des räumlichen Lichtmodulators in einer Betrachterebene erzeugt wird.

In dieser Ausführungsform wird das Sichtfeld durch die vergrößerte Abbildung der Fourier-Ebene des Lichtmodulators und deren Entfernung zum Betrachterfenster bestimmt. Wie schon weiter oben beschrieben kann die Verwendung einer Fourier-Ebene eines räumlichen Lichtmodulators vorteilhaft sein, um eine hohe Lichteffizienz zu erhalten.

Es kann maximal eine Beugungsordnung des Lichtmodulators zur Darstellung von Inhalten verwendet werden, da sich in weiteren Beugungsordnungen die dargestellten Inhalte wiederholen würden. Der Abstand zweier Beugungsordnungen ist proportional zum Reziproken des Pixelpitch eines Lichtmodulators, zur Wellenlänge des Lichts und zum Abstand zwischen Lichtmodulator und Fourier-Ebene. Hier bietet ein zweistufiger Aufbau, bei dem zunächst eine Fourier-Ebene mit einem kleinen Abstand der Beugungsordnungen erzeugt wird und dann vergrößert weiter abgebildet wird, den Vorteil, dass er kompakter ist als ein Aufbau mit dem in einer Stufe eine Fourier-Ebene mit einem großen Abstand der Beugungsordnungen erzeugt wird.

Gemäß einem Aspekt der Erfindung weist das optische System eine Filterebene zur Filterung höherer Beugungsordnungen auf. Durch die Filterung der höheren Beugungsordnungen wird eine verbesserte Qualität der dargestellten Inhalte erzielt. Die Filterebene befindet sich üblicherweise in oder nahe bei einer Fourier-Ebene des Lichtmodulators.

Gemäß einem Aspekt der Erfindung verwendet das Augmented-Reality-Head-up-Display eine Einzel-Parallax-Kodierung, bevorzugt eine horizontale Einzel-Parallax-Kodierung, wobei für die beiden Betrachterfenster in vertikaler Richtung jeweils ein Sweet Spot erzeugt wird. Die horizontale Einzel-Parallax-Kodierung hat den Vorteil, dass der Sweet Spot in vertikaler Richtung weit ausgedehnt sein kann, sodass gegebenenfalls nur eine horizontale Nachführung der Betrachterfenster nötig ist, weil sich vertikal der Kopf genügend weit innerhalb des Sweet Spots bewegen kann.

Möglich ist alternativ auch die Verwendung einer vertikalen Einzel-Parallax-Kodierung, wobei für die beiden Betrachterfenster in horizontaler Richtung jeweils ein Sweet Spot erzeugt wird. Die Ausdehnung des Sweet Spots muss dann deutlich kleiner als der Augenabstand sein. Zum Beispiel kann er im Bereich 20-30 mm groß sein. In einer solchen Ausführungsform ist jedoch eine horizontale und vertikale Nachführung der Betrachterfenster sinnvoll.

Bei der Einzel-Parallax-Kodierung wird wiederum die 3D-Szene in einzelne Punkte zerlegt. Für jeden Punkt der 3D-Szene wird ein Sub-Hologramm in Form einer Zylinderlinse im Lichtmodulator kodiert. Bei der horizontalen Einzel-Parallax-Kodierung ist nur in horizontaler Richtung eine Kohärenz des Lichtes erforderlich.

Zur Erzeugung eines großen Sweet Spots kann beispielsweise in vertikaler Richtung ein Streuer verwendet werden. Ein 1D-Streuer, der so angeordnet wird, dass er Licht nur vertikal streut, würde aufgrund dieser Streuung die vertikale Kohärenz zerstören aber die horizontale Kohärenz beibehalten. Häufig weisen jedoch eindimensionale Streuer eine geringe Streuung auch in andere Richtungen auf, sodass es zu unerwünschter Reduzierung der Kohärenz auch in horizontaler Richtung kommen könnte.

In einer bevorzugten Ausführungsform wird daher zum Erzeugen des Sweet Spots ein Lentikular verwendet, das heißt ein Array von Zylinderlinsen, das das Licht in einer Richtung aufweitet, um den Sweet Spot zu generieren, aber in der dazu senkrechten Richtung die Ausbildung des Betrachterfensters nicht stört. Das Lentikular besteht aus einer Vielzahl von kleinen Zylinderlinsen mit kurzer Brennweite. Das einfallende Licht wird durch die Zylinderlinsen in einem kleinen Abstand vom Lentikular zunächst fokussiert, aber nach Durchlaufen des Fokus aufgeweitet. Licht, das unterschiedliche Zylinderlinsen des Arrays durchläuft, wird dabei durchmischt. Durch den Rasterabstand des Lentikulars, also die Breite der einzelnen Zylinderlinsen, sowie durch die Brennweite der Zylinderlinsen kann dabei die Größe des Sweet Spots eingestellt werden. Aus dem Verhältnis Brennweite zu Durchmesser der Linsen kann ein maximaler Propagationswinkel des Lichts nach Durchlaufen der Zylinderlinsen berechnet werden. Bei einem Durchmesser der Linsen von 1 mm und einer Brennweite von 5 mm beträgt dieser beispielsweise ±5.7° (Arcus-tangens 0.1). Wird das Lentikular beispielsweise um den Faktor 5 vergrößert in eine Entfernung vom Betrachterfenster von 2 m abgebildet, so wird der vom vergrößerten Lentikular ausgehende Winkel um den Faktor 5 reduziert auf ca. ±1.14°. Es entsteht ein Sweet Spot von tan 1.14°.2000 mm, also ca. 80 mm Höhe.

Bei einer Ausführungsform der Erfindung, bei der die Betrachterfenster in der Ebene des Lichtquellenbildes liegen, wird das Zwischenbild des räumlichen Lichtmodulators in der Ebene des Lentikulars erzeugt und das Nachführelement oder die passive Ablenkvorrichtung sind nah beim Lentikular angeordnet sind. Beispielsweise kann ein Abstand von 1-20 mm realisiert sein. Wenn das Zwischenbild des Lichtmodulators in der Ebene des Lentikulars erzeugt wird, erlaubt dies vorteilhaft eine scharfe Abbildung in das endgültige Bild des Lichtmodulators ohne Störung durch das Lentikular. Eine Anordnung des Nachführelementes oder der passiven Ablenkvorrichtung nahe beim Lentikular und Zwischenbild des Lichtmodulators erlaubt vorteilhaft, dass beim Umschalten der Betrachterfenster für linkes und rechtes Auge oder beim Nachführen des Betrachterfensters die Position des endgültigen Bildes des Lichtmodulators fest bleibt. Ein Betrachter sieht also mit linkem und rechtem Auge oder von verschiedenen Positionen des Kopfes aus ein Bild des Lichtmodulators an einer festen Stelle.

Bei einer Ausführungsform der Erfindung, bei der die Betrachterfenster in der Ebene des Bildes des räumlichen Lichtmodulators liegen, wird die Fourier-Ebene des räumlichen Lichtmodulators in der Ebene des Lentikulars erzeugt und das Nachführelement oder die passive Ablenkvorrichtung sind nah beim Lentikular angeordnet. Auch hier kann bevorzugt ein Abstand von 1-20 mm realisiert sein. Vorzugsweise befindet sich die Filterebene zur Filterung höherer Beugungsordnungen in diesem Fall in der Ebene des Lentikulars.

Wird die Fourier-Ebene in der Ebene des Lentikulars erzeugt, so kann diese scharf weiter abgebildet werden, ohne dass diese Abbildung durch das Lentikular gestört wird. Eine Anordnung des Nachführelements oder der passiven Ablenkvorrichtung nahe beim Lentikular und der Fourier-Ebene des Lichtmodulators erlaubt vorteilhaft, dass beim Umschalten der Betrachterfenster für linkes und rechtes Auge oder beim Nachführen des Betrachterfensters die Position des Bildes der Fourier-Ebene des Lichtmodulators fest bleibt. Ein Betrachter sieht also mit linkem und rechtem Auge oder von verschiedenen Positionen des Kopfes aus ein Bild der Fourier-Ebene des Lichtmodulators an einer festen Stelle.

Gemäß einem Aspekt der Erfindung wird eine Fourier-Ebene des räumlichen Lichtmodulators in der Ebene eines Streuers erzeugt und das Nachführelement oder die passive Ablenkvorrichtung sind nah beim Streuer angeordnet. Beispielsweise kann ein Abstand von 1-20 mm realisiert sein. Diese Ausführungsform eignet sich insbesondere dann, wenn durch das Augmented-Reality-Head-up-Display stereoskopische Inhalte dargestellt werden. In diesem Fall wird für die Erzeugung der Fourier-Ebene des räumlichen Lichtmodulators kohärentes Licht benötigt mit dem der Lichtmodulator beleuchtet wird. Wir die Fourier-Ebene dann in der zweiten Stufe des optischen Systems abgebildet, so ist hierfür zur Darstellung stereoskopischer Inhalte keine Kohärenz mehr nötig. Es kann also ein Streuer eingesetzt werden, der die Kohärenz zerstört aber den Vorteil hat, dass er den Sweet Spot in horizontaler und vertikaler Richtung vergrößert. In horizontaler Richtung muss dabei der Streuwinkel des Streuers so eingestellt werden, dass ein Sweet Spot entsteht der deutlich kleiner ist als der Augenabstand, zum Beispiel 20-30 mm groß, damit die Betrachterfenster für linkes und rechtes Auge deutlich voneinander getrennt erzeugt werden.

In einer vorteilhaften Ausführungsform kann ein Streuer mit einem elliptischen Streuprofil verwendet werden, der also in vertikaler Richtung größere Streuwinkel aufweist als in horizontaler Richtung. Wird auf diese Weise ein genügend großer vertikaler Sweet Spot erzeugt, so ist vorteilhaft nur eine horizontale Nachführung der Betrachterfenster nötig.

In einer anderen Ausführungsform kann ein herkömmlicher Streuer mit einem runden Streuprofil verwendet werden, der also in alle Richtungen gleiche Streuwinkel aufweist, zum Beispiel in Kombination mit einer horizontalen und vertikalen Nachführung der Betrachterfenster.

Besonders vorteilhaft wird ein erfindungsgemäßes Augmented-Reality-Head-up-Display in einem Fortbewegungsmittel, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch den allgemeinen Aufbau eines Head-up-Displays für ein Kraftfahrzeug;
- Fig. 2: zeigt schematisch den Aufbau eines erfindungsgemäßen Augmented-Reality-Head-up-Displays;
- Fig. 3: stellt schematisch ein Kraftfahrzeug dar, in dem eine erfindungsgemäße Lösung realisiert ist;
- Fig. 4: zeigt schematisch in Seitenansicht eine Anordnung, bei der die Betrachterfenster als Bild eines räumlichen Lichtmodulators realisiert sind;
- Fig. 5: zeigt die Anordnung aus Fig. 4 in Sicht von oben;
- Fig. 6: zeigt eine Seitenansicht eines ersten Details der Anordnung aus Fig. 4;
- Fig. 7: zeigt eine Seitenansicht eines weiteren Details der Anordnung aus Fig. 4;
- Fig. 8: zeigt eine im Vergleich zu Fig. 7 leicht veränderte Anordnung;
- Fig. 9: zeigt in Seitenansicht eine Anordnung, bei der die Betrachterfenster in der Ebene eines Lichtquellenbildes erzeugt werden;
- Fig. 10: zeigt eine Seitenansicht eines Details der Anordnung aus Fig. 9;
- Fig. 11: zeigt in Seitenansicht eine Anordnung analog zur Anordnung aus Fig. 9, in der Spiegel verwendet werden; und
- Fig. 12: zeigt die Anordnung aus Fig. 11 in Sicht von oben.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

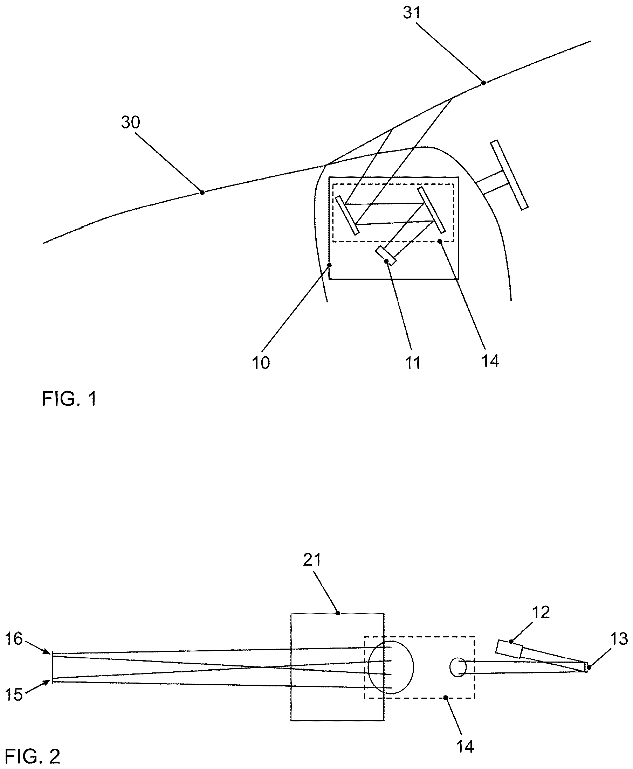

Fig. 1 zeigt schematisch ein Head-up-Display 10 für ein Kraftfahrzeug 30, mit dessen Hilfe Inhalte auf einer Projektionsfläche 31 des Kraftfahrzeugs 30 angezeigt werden können, beispielsweise auf der Frontscheibe oder auf einer zusätzlichen Scheibe aus Glas oder Kunststoff, die zwischen dem Fahrer und der Frontscheibe auf dem Armaturenbrett angeordnet ist. Die dargestellten Inhalte werden durch eine bildgebende Einheit 11 erzeugt und mit Hilfe eines optischen Systems 14 auf die Projektionsfläche 31 projiziert, sodass sie für einen Betrachter wahrnehmbar sind, dessen Augen sich innerhalb eines Betrachterfensters 22 befinden. Typischerweise erfolgt die Projektion dabei in einen Bereich der Frontscheibe oberhalb des Lenkrades. Die bildgebende Einheit 11 kann zumindest eine Lichtquelle und einen räumlichen Lichtmodulator umfassen. Das Head-up-Display 10 ist in der Regel in einem Armaturenbrett des Kraftfahrzeugs 30 verbaut.

Fig. 2 zeigt schematisch den Aufbau eines erfindungsgemäßen Augmented-Reality-Head-up-Displays 10. Dargestellt ist eine Draufsicht auf das Augmented-Reality-Head-up-Display 10. Mittels einer Lichtquelle 11 und eines räumlichen Lichtmodulators 12 werden durch eine bildgebende Einheit 11 anzuzeigende Inhalte erzeugt. Die anzuzeigenden Inhalte werden mit Hilfe eines hier nur abstrakt dargestellten optischen Systems 14 auf einen Kombinierer 21 projiziert, bei dem es sich wie schon in Fig. 1 um die Windschutzscheibe eines Kraftfahrzeugs handeln kann. Das optische System 14 ist dazu eingerichtet, ein erstes Betrachterfenster 15 für ein linkes Auge eines Betrachters und ein zweites Betrachterfenster 16 für ein rechtes Auge des Betrachters zu erzeugen. Auf diese Weise können für die beiden Augen unterschiedliche Inhalte angezeigt werden, was die Rekonstruktion einer 3D-Szene ermöglicht.

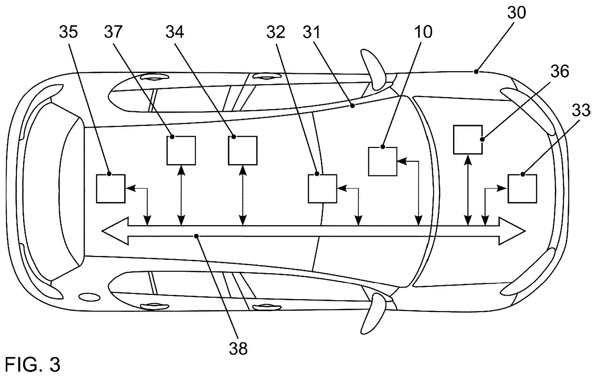

Fig. 3 stellt schematisch ein Kraftfahrzeug 30 dar, in dem ein erfindungsgemäßes Augmented-Reality-Head-up-Display 10 verbaut ist. Zusätzlich zum Augmented-Reality-Head-up-Display 10 weist das Kraftfahrzeug 30 eine Kamera 32 zur Fahrerbeobachtung und Umgebungssensoren 33 auf. Mittels der Kamera 32 kann beispielsweise eine Augenposition des Fahrers bestimmt werden, um die Lage der Betrachterfenster nachführen zu können. zudem kann mittels der Kamera ein Augenabstand des Fahrers bestimmt werden. Der Abstand der Betrachterfenster kann dann an den Augenabstand angepasst werden. Weitere Komponenten des Kraftfahrzeugs 30 sind ein Navigationssystem 34, eine Datenübertragungseinheit 35 sowie eine Reihe von Assistenzsystemen 36, von denen eines exemplarisch dargestellt ist. Mittels der Datenübertragungseinheit 35 kann beispielsweise eine Verbindung zu Dienstanbietern aufgebaut werden. Zur Speicherung von Daten ist ein Speicher 37 vorhanden. Der Datenaustausch zwischen den verschiedenen Komponenten des Kraftfahrzeugs 30 erfolgt über ein Netzwerk 38.

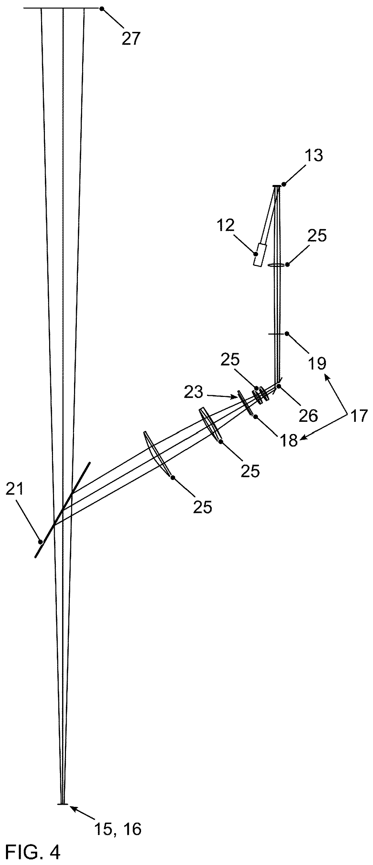

Nachfolgend sollen bevorzugte Ausführungsformen eines erfindungsgemäßen Augmented-Reality-Head-up-Displays anhand von Fig. 4 bis Fig. 13 beschrieben werden. Die Strahlengänge in den Figuren sind stark vereinfacht dargestellt.

Fig. 4 zeigt schematisch in Seitenansicht eine Anordnung, bei der die Betrachterfenster 15, 16 als Bild eines räumlichen Lichtmodulators 13 realisiert sind. Das vom räumlichen Lichtmodulator 13 modulierte Licht einer Lichtquelle 12 wird über Linsen 25 und Spiegel 26 des optischen Systems auf einen Kombinierer 21 projiziert. Dabei durchläuft es ein Lentikular 23, ein Schaltelement 19 und ein passives Ablenkelement 18. Das Schaltelement 19 und das passive Ablenkelement 18 bilden zusammen eine Umschalteinheit 17. Bei dem Schaltelement 19 handelt es sich hier um einen Polarisationsumschalter, bei dem passiven Ablenkelement 18 um ein Polarisationsgitter. Mit Hilfe der Umschalteinheit 17 werden zwei Betrachterfenster 15, 16 erzeugt, je eines für ein linkes Auge und ein rechtes Auge eines Betrachters. Das Polarisationsgitter hat dazu eine von einer Eingangspolarisation des einfallenden Lichts abhängige bevorzugte Beugungsordnung. Bevorzugte Beugungsordnung heißt, dass für eine bestimmte Eingangspolarisation der überwiegende Anteil des einfallenden Lichtes in diese Beugungsordnung gelenkt wird. Anders ausgedrückt, die bevorzugte Beugungsordnung weist eine hohe Beugungseffizienz auf, während andere Beugungsordnungen eine niedrige Beugungseffizienz aufweisen. Insbesondere kann es sich bei den bevorzugten Beugungsordnungen um die plus erste und die minus erste Ordnung handeln. Mit der minus ersten Ordnung des Polarisationsgitters kann z.B. das Betrachterfenster 15 für das linke Auge und mittels der plus ersten Ordnung das Betrachterfenster 16 für das rechte Auge erzeugt werden, oder umgekehrt. Der Polarisationsumschalter kann beispielsweise ein flüssigkristallbasierter Schalter sein, der so ausgestaltet ist, dass er, wenn keine Spannung anliegt, die Polarisation des einfallenden Lichts dreht, wenn jedoch eine genügend hohe Spannung anliegt, Licht ohne Drehung der Polarisation passieren lässt. Referenzebene 27 für eine Berechnung eines Hologramms aus einer 3D-Szene ist in diesem Fall eine Fourier-Ebene des räumlichen Lichtmodulators 13. Die 3D-Szene erscheint für den Betrachter vor und/oder hinter der Referenzebene 27 im Frustrum, das durch die Betrachterfenster 15, 16 und die Referenzebene 27 aufgespannt wird.

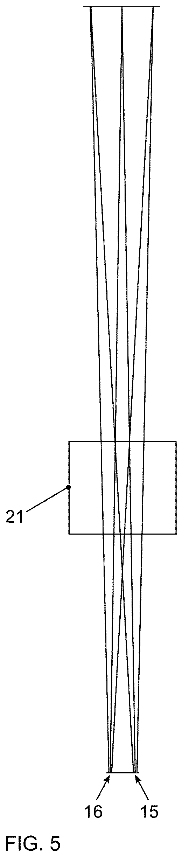

Fig. 5 zeigt die Anordnung aus Fig. 4 in Sicht von oben. Die unterhalb des Kombinierers 21 angeordneten Komponenten sind in Hinblick auf die Übersichtlichkeit nicht dargestellt. Hierbei ist zu erkennen, dass zwei Betrachterfenster 15, 16 erzeugt werden, eines für das linke und eines für das rechte Auge. Auf dem Kombinierer 21 überlappt das Licht, das in Richtung linkes oder rechtes Betrachterfenster 15, 16 läuft, zumindest teilweise.

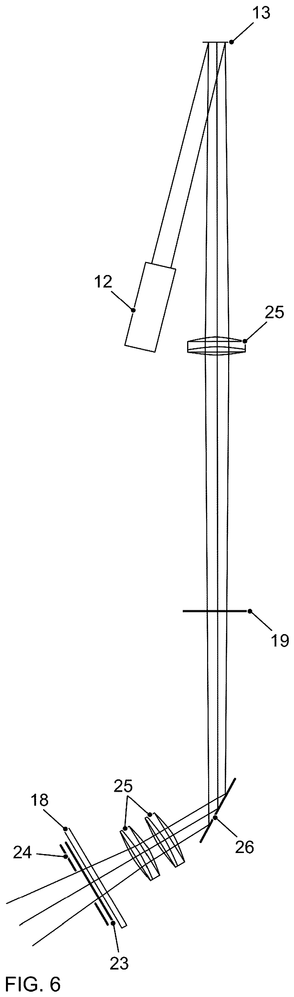

Fig. 6 zeigt eine Seitenansicht eines ersten Details der Anordnung aus Fig. 4. Dargestellt ist der Bereich von der Lichtquelle 12 bis zum passiven Ablenkelement 18, d.h. bis zum Polarisationsgitter. Die Lichtquelle 12 beleuchtet den räumlichen Lichtmodulator 13. In diesem Beispiel handelt es sich beim räumlichen Lichtmodulator 13 um einen reflektiven Lichtmodulator. Die Beleuchtung durch die Lichtquelle 12 erfolgt daher unter einem kleinen Winkel schräg von vorne. Die Linsen 25 dieses ersten Teils des optischen Systems erzeugen eine Fourier-Ebene des räumlichen Lichtmodulators 13 am Ort des Lentikulars 23. Dicht beim Lentikular 23 befindet sich das passive Ablenkelement 18 als Teil der Umschalteinheit 17. Ein Polarisationsumschalter als Schaltelement 19 bildet zusammen mit dem Polarisationsgitter die Umschalteinheit 17. Nah beim Lentikular 23 befindet sich zudem eine Blende bzw. ein Filter 24 zur Filterung höherer Ordnungen.

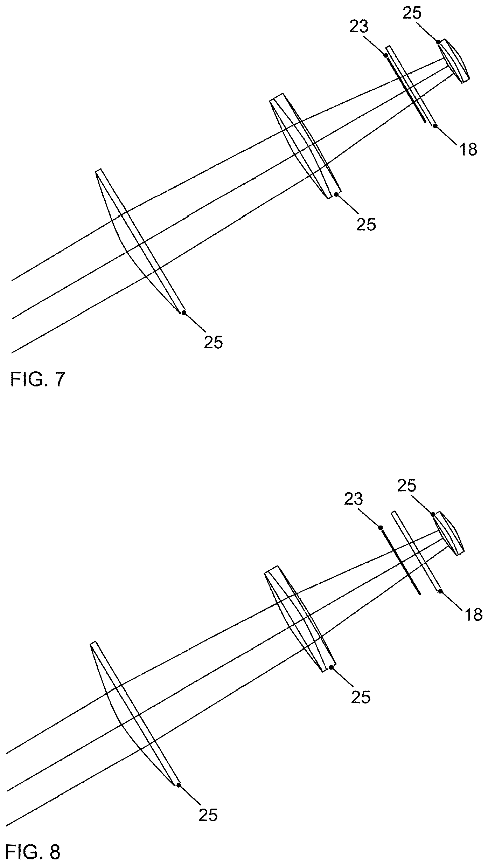

Fig. 7 zeigt eine Seitenansicht eines weiteren Details der Anordnung aus Fig. 4. Gezeigt sind die Linsen 25 eines zweiten Teils des optischen Systems, die die Fourier-Ebene des räumlichen Lichtmodulators am Ort des Lentikulars 23 sowie das passive Ablenkelement 18, d.h. das Polarisationsgitter, weiter in die Referenzebene abbilden.

Fig. 8 zeigt eine im Vergleich zu Fig. 7 leicht veränderte Anordnung. Das passive Ablenkelement 18 ist hier im Vergleich zu Fig. 7 verschoben, d.h. es befindet sich etwas weiter weg vom Lentikular 23. Dadurch ändert sich auch der Abstand des Ablenkelements 18 zu den beiden Linsen 25 und damit sowohl die Bildweite wie auch die Vergrößerung, mit der das passive Ablenkelement 18 abgebildet wird. Durch eine solche Verschiebung des passiven Ablenkelements 18 kann der Abstand zwischen den beiden Betrachterfenstern für das linke und das rechte Auge eines Betrachters an den detektierten Augenabstand des Betrachters angepasst werden. In dem gezeigten Beispiel ist in Fig. 7 ein Augenabstand von 70 mm eingestellt. Durch die Verschiebung des passiven Ablenkelements 18 in Fig. 8 wird der eingestellte Augenabstand auf 60 mm reduziert.

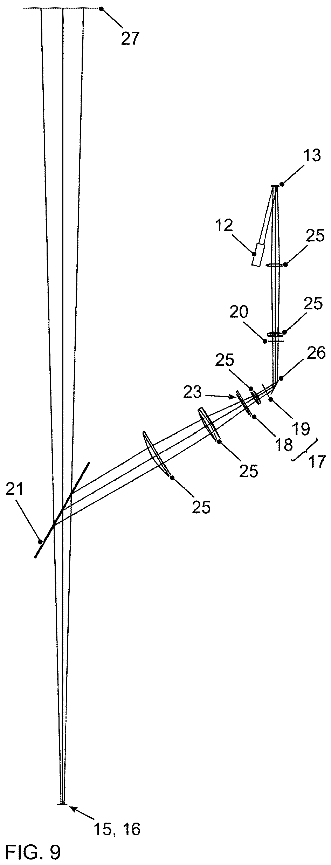

Fig. 9 zeigt in Seitenansicht eine im Vergleich zu Fig. 4 geänderte Anordnung. In dieser Anordnung werden die Betrachterfenster 15, 16 in der Ebene eines Lichtquellenbildes bzw. einer Fourier-Ebene erzeugt. Die Referenzebene 27 ist in diesem Fall eine Bildebene des räumlichen Lichtmodulators 13.

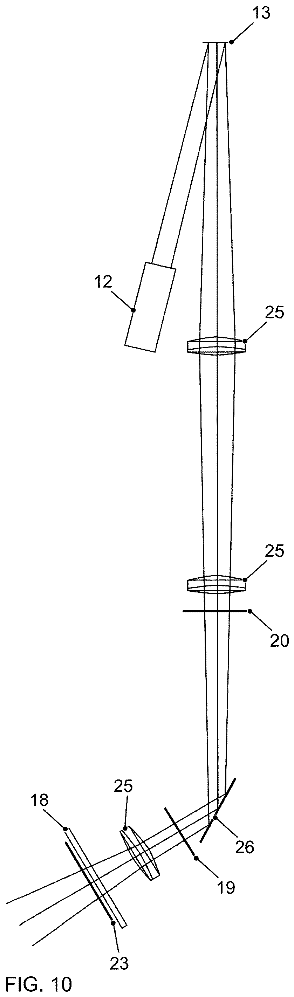

Fig. 10 zeigt in Seitenansicht den ersten Teil des optischen Systems. Mit Hilfe von in diesem Beispiel drei Linsen 25 wird in der Ebene des Lentikulars 23 eine Zwischenbildebene des räumlichen Lichtmodulators 13 erzeugt. Eine Fourier-Ebene des räumlichen Lichtmodulators 13, die als Filterebene 20 zur Filterung von höheren Beugungsordnungen genutzt werden kann, befindet sich irgendwo zwischen dem räumlichen Lichtmodulator 13 und dem Lentikular. Der Polarisationsumschalter als Schaltelement 19 und das Polarisationsgitter als passives Ablenkelement 18 können dabei wieder genauso verwendet werden, wie es anhand von Fig. 4 und Fig. 5 für die Anordnung, bei der die Betrachterfenster als Bild eines räumlichen Lichtmodulators 13 realisiert sind, beschrieben ist. Der zweite Teil des optischen Systems, d.h. die Linsen nach dem Lentikular 23, sowie auch das Umschalten zwischen dem linkem Betrachterfenster und dem rechtem Betrachterfenster ist gleich wie zuvor und wird daher nicht noch einmal detailliert gezeigt.

In den in Fig. 4 bis Fig. 10 dargestellten Ausführungsformen werden im ersten Teil des optischen Systems Linsen gezeigt für die Zwischenabbildung des räumlichen Lichtmodulators oder der Fourier-Ebene des räumlichen Lichtmodulators am Ort des Lentikulars. Auch im zweiten Teil des optischen Systems werden Linsen für die weitere Abbildung des Zwischenbildes oder der Fourier-Ebene des räumlichen Lichtmodulators in die Referenzebene genutzt. In beiden Fällen können anstelle von Linsen aber auch andere Arten von Abbildungselementen verwendet werden, wie beispielsweise Spiegel oder auch diffraktive Optiken oder Kombinationen unterschiedlicher Abbildungselemente, z.B. eine Linse und ein Spiegel. Auch die Zahl der verwendeten Abbildungselemente ist nicht auf die in Fig. 4 bis Fig. 10 verwendeten Beispiele beschränkt. Der erste Teil und der zweite Teil des optischen Systems enthalten jeweils mindestens ein Abbildungselement.

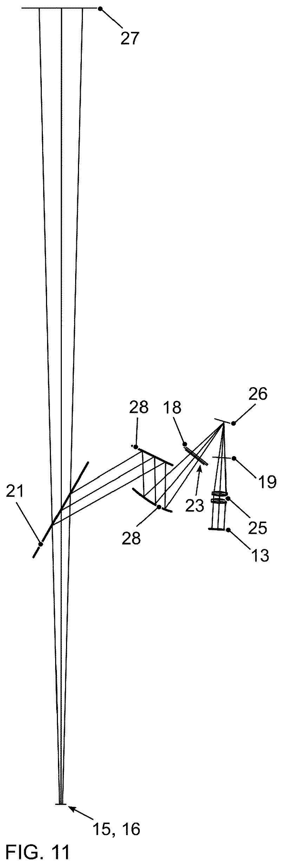

In konventionellen Head-up Displays ist beispielsweise die Verwendung von Spiegeln üblich. Freiformspiegel dienen dort der Abbildung des Bildgebers, d.h. des Displays, über die Windschutzscheibe. Die Spiegelform dient dabei auch zur Korrektur der Krümmung der Windschutzscheibe. Auch ein erfindungsgemäßes Head-up-Display kann derartige Freiformspiegel nutzen. Ein Beispiel dafür ist in Fig. 11 gezeigt.

In Analogie zur Fig. 9 zeigt Fig. 11 eine Anordnung, bei der die Betrachterfenster 15, 16 in der Ebene eines Lichtquellenbildes erzeugt werden. In dem ersten Teil des optischen Systems erfolgt wieder eine Zwischenabbildung des räumlichen Lichtmodulators 13 mittels Linsen 25 an den Ort eines Lentikulars 23 und eines unmittelbar beim Lentikular 23 befindlichen Polarisationsgitters als passives Ablenkelement 18. Im zweiten Teil des optischen Systems erfolgt die weitere Abbildung des Zwischenbildes des räumlichen Lichtmodulators 13 und des Polarisationsgitters in die Referenzebene 27, jetzt mittels eines gekrümmten Kombinierers 21, d.h. einer gekrümmten Windschutzscheibe, und mittels zweier Freiformspiegel 28. Zusätzlich wird mittels der gleichen Abbildungselemente auch das Lichtquellenbild in die Betrachterfenster 15, 16 abgebildet. Im Unterschied zu einem konventionellen Head-up-Display mit einer großen Eyebox wird in diesem Fall die Form der Freiformspiegel 28 so gewählt, dass nicht allein die Bildqualität in der Referenzebene 27, sondern auch die Ausbildung eines Betrachterfensters 15, 16 berücksichtigt wird. Hierzu wird beispielsweise im Optik-Design für die Optimierung der Spiegelform eine Merit-Funktion verwendet, die nicht nur die Spotgröße in der Referenzebene 27 optimiert, sondern zusätzlich Bedingungen für die Position der Lichtstrahlen in der Ebene der Betrachterfenster 15, 16 enthält.

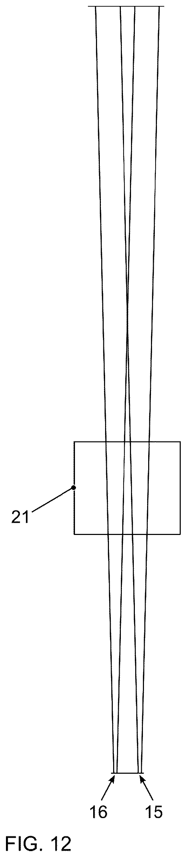

Fig. 12 zeigt in Analogie zu Fig. 5 in dem System mit Spiegeln wieder die Erzeugung der Betrachterfenster 15, 16 für das linke Auge und das rechte Auge. Die unterhalb des Kombinierers 21 angeordneten Komponenten sind in Hinblick auf die Übersichtlichkeit nicht dargestellt. Auf dem Kombinierer 21 überlappt das Licht, das in Richtung linkes oder rechtes Betrachterfenster 15, 16 läuft, wiederum zumindest teilweise.

Bei der in Fig. 11 und Fig. 12 gezeigten Anordnung werden die Betrachterfenster in der Ebene eines Lichtquellenbildes erzeugt. Analog zu den vorher in Bezug auf Fig. 4 bis Fig. 10 diskutierten Fällen ist es auch bei der Anordnung mit Freiformspiegeln ausreichend, den ersten Teil des optischen Systems zwischen dem räumlichen Lichtmodulator und dem Lentikular bzw. dem passiven Ablenkelement zu ändern, um zu einer Anordnung zu gelangen, bei der die Betrachterfenster als Bild des räumlichen Lichtmodulators realisiert sind. Die Freiformspiegel selbst können unverändert bleiben.

### Bezugszeichenliste

- 10: Head-up-Display
- 11: Bildgebende Einheit
- 12: Lichtquelle
- 13: Räumlicher Lichtmodulator
- 14: Optisches System
- 15: Erstes Betrachterfenster
- 16: Zweites Betrachterfenster
- 17: Umschalteinheit
- 18: Passives Ablenkelement
- 19: Schaltelement
- 20: Filterebene
- 21: Kombinierer
- 22: Betrachterfenster
- 23: Lentikular
- 24: Filter
- 25: Linse
- 26: Spiegel
- 27: Referenzebene
- 28: Freiformspiegel
- 30: Kraftfahrzeug
- 31: Windschutzscheibe
- 32: Kamera
- 33: Umgebungssensor
- 34: Navigationssystem
- 35: Datenübertragungseinheit
- 36: Assistenzsystem
- 37: Speicher
- 38: Netzwerk

## Patentansprüche

1. Augmented-Reality-Head-up-Display (10) mit:
- zumindest einer Lichtquelle (12);
- zumindest einem räumlichen Lichtmodulator (13); und
- einem optischen System (14), wobei das optische System (14) eingerichtet ist, ein erstes Betrachterfenster (15) für ein linkes Auge eines Betrachters und ein zweites Betrachterfenster (16) für ein rechtes Auge des Betrachters zu erzeugen, wobei das erste Betrachterfenster (15) und das zweite Betrachterfenster (16) in einem horizontalen Abstand, der einem üblichen Augenabstand entspricht, voneinander beabstandet angeordnet sind, und wobei das erste Betrachterfenster (15) und das zweite Betrachterfenster (16) zeitlich nacheinander erzeugt werden und das optische System (14) eine Umschalteinheit (17) mit einem passiven Ablenkelement (18) und zumindest einem Schaltelement (19) zum Umschalten zwischen dem ersten Betrachterfenster (15) und dem zweiten Betrachterfenster (16) aufweist;
**dadurch gekennzeichnet, dass** die Umschalteinheit (17) ein Gitter aufweist, wobei das Gitter vergrößert abgebildet wird und der Ablenkwinkel des Gitters, die optische Vergrößerung und eine Bildweite des Gitters in Bezug auf die Betrachterfenster (15, 16) so eingestellt werden, dass ein horizontaler Abstand zwischen dem ersten Betrachterfenster (15) und dem zweiten Betrachterfenster (16) einem Augenabstand eines Betrachters entspricht, und wobei die optische Vergrößerung oder die Bildweite des Gitters an den Augenabstand des Betrachters anpassbar sind.

2. Augmented-Reality-Head-up-Display (10) gemäß Anspruch 1, wobei das Augmented-Reality-Head-up-Display (10) zwei oder mehr Lichtquellen (12) mit unterschiedlichen Wellenlängen aufweist und Inhalte für die jeweiligen Wellenlängen auf dem räumlichen Lichtmodulator (13) nacheinander angezeigt werden und die zwei oder mehr Lichtquellen (12) synchronisiert mit den angezeigten Inhalten ein- oder ausgeschaltet werden.

3. Augmented-Reality-Head-up-Display (10) gemäß Anspruch 1 oder 2, wobei das Gitter relativ zu zumindest einem abbildenden Element des optischen Systems (14) verschiebbar ist.

4. Augmented-Reality-Head-up-Display (10) gemäß einem der Ansprüche 1 bis 3, wobei das zumindest eine Schaltelement (19) ein Polarisationsumschalter ist, und wobei das passive Ablenkelement (18) ein Polarisationsstrahlteiler oder ein Polarisationsgitter mit einer von einer Eingangspolarisation des einfallenden Lichts abhängigen bevorzugten Beugungsordnung ist.

5. Augmented-Reality-Head-up-Display (10) gemäß einem der vorherigen Ansprüche, wobei das passive Ablenkelement (18) ein farbkorrigiertes Polarisationsgitter ist.

6. Augmented-Reality-Head-up-Display (10) gemäß einem der vorherigen Ansprüche, wobei das optische System (14) wenigstens ein Nachführelement zum Nachführen der Betrachterfenster (15, 16) in Abhängigkeit von einer Augenposition oder einer Kopfposition des Betrachters aufweist.

7. Augmented-Reality-Head-up-Display (10) gemäß einem der Ansprüche 1 bis 6, wobei das erste Betrachterfenster (15) und das zweite Betrachterfenster (16) jeweils in einer Ebene eines Lichtquellenbildes erzeugt werden, und wobei ein vergrößertes Bild des räumlichen Lichtmodulators (13) in einer bestimmten Entfernung von den Betrachterfenstern (15, 16) erzeugt wird und als Referenzebene (27) für eine Berechnung eines Hologramms aus einer 3D-Szene dient.

8. Augmented-Reality-Head-up-Display (10) gemäß einem der Ansprüche 1 bis 6, wobei das erste Betrachterfenster (15) und das zweite Betrachterfenster (16) jeweils in einer Ebene eines Bildes des räumlichen Lichtmodulators (13) erzeugt werden, und wobei eine Fourier-Ebene des räumlichen Lichtmodulators (13) in einer bestimmten Entfernung von den Betrachterfenstern (15, 16) erzeugt wird und als Referenzebene (27) für eine Berechnung eines Hologramms aus einer 3D-Szene dient.

9. Augmented-Reality-Head-up-Display (10) gemäß einem der Ansprüche 1 bis 6, wobei in oder nahe einer Ebene eines Nachführelements oder eines Ablenkelements (18) durch eine erste Abbildungsstufe des optischen Systems (14) ein Zwischenbild des räumlichen Lichtmodulators (13) entsteht, das durch eine zweite Abbildungsstufe des optischen Systems (14) weiter abgebildet wird, sodass ein Lichtquellenbild in einer Betrachterebene erzeugt wird.

10. Augmented-Reality-Head-up-Display (10) gemäß einem der Ansprüche 1 bis 6, wobei in oder nahe einer Ebene eines Nachführelements oder eines Ablenkelements (18) durch eine erste Abbildungsstufe des optischen Systems (14) eine Fourier-Ebene des räumlichen Lichtmodulators (13) erzeugt wird, die durch eine zweite Abbildungsstufe des optischen Systems (14) weiter abgebildet wird, sodass ein Bild des räumlichen Lichtmodulators (13) in einer Betrachterebene erzeugt wird.

11. Augmented-Reality-Head-up-Display (10) gemäß einem der vorherigen Ansprüche, wobei das Augmented-Reality-Head-up-Display (10) eine Einzel-Parallax-Kodierung verwendet, und wobei für die beiden Betrachterfenster (15, 16) jeweils ein Sweet Spot senkrecht zu einer Kodierungsrichtung erzeugt wird.

## Claims

1. Augmented-reality head-up display (10) comprising:
- at least one light source (12);
- at least one spatial light modulator (13); and
- an optical system (14), the optical system (14) being configured to generate a first viewer window (15) for a left eye of a viewer and a second viewer window (16) for a right eye of the viewer, the first viewer window (15) and the second viewer window (16) being arranged at a horizontal distance from one another corresponding to a normal interocular distance, and the first viewer window (15) and the second viewer window (16) being generated sequentially and the optical system (14) comprising a switching unit (17) having a passive deflection element (18) and at least one switching element (19) for switching between the first viewer window (15) and the second viewer window (16);
**characterized in that** the switching unit (17) has a grid, the grid being magnified and the deflection angle of the grid, the optical magnification and an image distance of the grid with respect to the viewer windows (15, 16) being set such that a horizontal distance between the first viewer window (15) and the second viewer window (16) corresponds to the interocular distance of a viewer, and the optical magnification or the image distance of the grid being adjustable to the interocular distance of the viewer.

2. Augmented-reality head-up display (10) according to claim 1, wherein the augmented-reality head-up display (10) has two or more light sources (12) having different wavelengths and content for the respective wavelengths is displayed sequentially on the spatial light modulator (13) and the two or more light sources (12) are switched on or off synchronously with the displayed content.

3. Augmented-reality head-up display (10) according to claim 1 or 2, wherein the grid is movable relative to at least one imaging element of the optical system (14).

4. Augmented-reality head-up display (10) according to any of claims 1 to 3, wherein the at least one switching element (19) is a polarization switch, and wherein the passive deflection element (18) is a polarization beam splitter or a polarization grid having a preferred diffraction order dependent on an input polarization of the incident light.

5. Augmented-reality head-up display (10) according to any of the preceding claims, wherein the passive deflection element (18) is a colorcorrected polarization grid.

6. Augmented-reality head-up display (10) according to any of the preceding claims, wherein the optical system (14) has at least one tracking element for tracking the viewer windows (15, 16) on the basis of an eye position or a head position of the viewer.

7. Augmented-reality head-up display (10) according to any of claims 1 to 6, wherein the first viewer window (15) and the second viewer window (16) are each generated in a plane of a light source image, and wherein a magnified image of the spatial light modulator (13) is generated at a certain distance from the viewer windows (15, 16) and serves as a reference plane (27) for a calculation of a hologram from a 3D scene.

8. Augmented-reality head-up display (10) according to any of claims 1 to 6, wherein the first viewer window (15) and the second viewer window (16) are each generated in a plane of an image of the spatial light modulator (13), and wherein a Fourier plane of the spatial light modulator (13) is generated at a certain distance from the viewer windows (15, 16) and serves as a reference plane (27) for a calculation of a hologram from a 3D scene.

9. Augmented-reality head-up display (10) according to any of claims 1 to 6, wherein, in or near a plane of a tracking element or a deflection element (18), an intermediate image of the spatial light modulator (13) is created by a first imaging stage of the optical system (14), and the intermediate image is further imaged by a second imaging stage of the optical system (14) so that a light source image is generated in a viewer plane.

10. Augmented-reality head-up display (10) according to any of claims 1 to 6, wherein, in or near a plane of a tracking element or a deflection element (18), a Fourier plane of the spatial light modulator (13) is generated by a first imaging stage of the optical system (14), and the Fourier plane is further imaged by a second imaging stage of the optical system (14) so that an image of the spatial light modulator (13) is generated in a viewer plane.

11. Augmented-reality head-up display (10) according to any of the preceding claims, wherein the augmented-reality head-up display (10) uses single parallax encoding, and wherein a sweet spot is generated perpendicularly to an encoding direction for each of the two viewer windows (15, 16).

## Revendications

1. Afficheur tête haute à réalité augmentée (10) comportant :
- au moins une source de lumière (12) ;
- au moins un modulateur spatial de lumière (13) ; et
- un système optique (14), dans lequel le système optique (14) est destiné à générer une première fenêtre d'observateur (15) pour un œil gauche d'un observateur et une seconde fenêtre d'observateur (16) pour un œil droit de l'observateur, dans lequel la première fenêtre d'observateur (15) et la seconde fenêtre d'observateur (16) sont espacées l'une de l'autre d'une distance horizontale qui correspond à une distance habituelle entre les yeux, et dans lequel la première fenêtre d'observateur (15) et la seconde fenêtre d'observateur (16) sont générées successivement dans le temps et le système optique (14) présente une unité de commutation (17) comportant un élément de déviation passif (18) et au moins un élément de commutation (19) pour la commutation entre la première fenêtre d'observateur (15) et la seconde fenêtre d'observateur (16) ;
**caractérisé en ce que** l'unité de commutation (17) présente un réseau, dans lequel une image agrandie du réseau est formée et l'angle de déviation du réseau, le grossissement optique et une largeur d'image du réseau par rapport aux fenêtres d'observateur (15, 16) sont réglés de telle sorte qu'une distance horizontale entre la première fenêtre d'observateur (15) et la seconde fenêtre d'observateur (16) correspond à une distance entre les yeux d'un observateur, et dans lequel le grossissement optique ou la largeur d'image du réseau est adaptable à la distance entre les yeux de l'observateur.

2. Affichage tête haute à réalité augmentée (10) selon la revendication 1, dans lequel l'affichage tête haute à réalité augmentée (10) présente deux sources de lumière (12) ou plus comportant des longueurs d'onde différentes et des contenus pour les longueurs d'onde respectives sont affichés successivement sur le modulateur spatial de lumière (13) et les deux sources de lumière (12) ou plus sont allumées ou éteintes de manière synchronisée avec les contenus affichés.

3. Affichage tête haute à réalité augmentée (10) selon la revendication 1 ou 2, dans lequel le réseau est déplaçable par rapport à au moins un élément de formation d'image du système optique (14).

4. Affichage tête haute à réalité augmentée (10) selon l'une des revendications 1 à 3, dans lequel l'au moins un élément de commutation (19) est un commutateur de polarisation, et dans lequel l'élément de déviation passif (18) est un séparateur de faisceau de polarisation ou un réseau de polarisation comportant un ordre de diffraction préféré dépendant d'une polarisation d'entrée de la lumière incidente.

5. Affichage tête haute à réalité augmentée (10) selon l'une des revendications précédentes, dans lequel l'élément de déviation passif (18) est un réseau de polarisation à couleur corrigée.

6. Affichage tête haute à réalité augmentée (10) selon l'une des revendications précédentes, dans lequel le système optique (14) présente au moins un élément de suivi pour suivre les fenêtres d'observateur (15, 16) en fonction d'une position des yeux ou d'une position de la tête de l'observateur.

7. Affichage tête haute à réalité augmentée (10) selon l'une des revendications 1 à 6, dans lequel la première fenêtre d'observateur (15) et la seconde fenêtre d'observateur (16) sont générées respectivement dans un plan d'une image de source de lumière, et dans lequel une image agrandie du modulateur spatial de lumière (13) est générée à un éloignement déterminé des fenêtres d'observateur (15, 16) et sert de plan de référence (27) pour un calcul d'un hologramme à partir d'une scène 3D.

8. Affichage tête haute à réalité augmentée (10) selon l'une des revendications 1 à 6, dans lequel la première fenêtre d'observateur (15) et la seconde fenêtre d'observateur (16) sont respectivement générées dans un plan d'une image du modulateur spatial de lumière (13), et dans lequel un plan de Fourier du modulateur spatial de lumière (13) est généré à un éloignement déterminé des fenêtres d'observateur (15, 16) et sert de plan de référence (27) pour un calcul d'un hologramme à partir d'une scène 3D.

9. Affichage tête haute à réalité augmentée (10) selon l'une des revendications 1 à 6, dans lequel, dans ou à proximité d'un plan d'un élément de suivi ou d'un élément de déviation (18), une image intermédiaire du modulateur spatial de lumière (13) apparaît par le biais d'un premier étage de formation d'image du système optique (14), laquelle image intermédiaire est davantage formée par un second étage de formation d'image du système optique (14), de sorte qu'une image de source de lumière est générée dans un plan d'observateur.

10. Affichage tête haute à réalité augmentée (10) selon l'une des revendications 1 à 6, dans lequel, dans ou à proximité d'un plan d'un élément de suivi ou d'un élément de déviation (18), un plan de Fourier du modulateur spatial de lumière (13) est généré par le biais d'un premier étage de formation d'image du système optique (14), lequel plan de Fourier est davantage formé par un second étage de formation d'image du système optique (14), de sorte qu'une image du modulateur spatial de lumière (13) est générée dans un plan d'observateur.

11. Affichage tête haute à réalité augmentée (10) selon l'une des revendications précédentes, dans lequel l'affichage tête haute à réalité augmentée (10) utilise un codage à parallaxe unique, et dans lequel un point idéal perpendiculaire à une direction de codage est généré respectivement pour les deux fenêtres d'observateur (15, 16).
